(19) Europäisches Patentamt
European Patent Office
Office européen des brevets

(11) EP 3 227 192 B1

(12) EUROPEAN PATENT SPECIFICATION

(45) Date of publication and mention of the grant of the patent:
**17.10.2018 Bulletin 2018/42**

(21) Application number: **15798371.9**

(22) Date of filing: **17.11.2015**

(51) Int Cl.:
***B65D 1/02*** (2006.01) ***C08F 210/06*** (2006.01)
***C08F 10/06*** (2006.01)

(86) International application number:
**PCT/EP2015/076767**

(87) International publication number:
**WO 2016/087185 (09.06.2016 Gazette 2016/23)**

(54) **PROPYLENE BASED TERPOLYMER FOR CONTAINERS**

PROPYLENBASIERTES TERPOLYMER FÜR BEHÄLTER

TERPOLYMÈRE À BASE DE PROPYLÈNE POUR CONTENANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.12.2014 EP 14196159**

(43) Date of publication of application:
**11.10.2017 Bulletin 2017/41**

(73) Proprietor: **Basell Poliolefine Italia S.r.l.
20121 Milano (IT)**

(72) Inventors:
- **CIARAFONI, Marco
I-44122 Ferrara (IT)**
- **DESTRO, Mara
I-44122 Ferrara (IT)**
- **MASSARI, Paola
I-44122 Ferrara (IT)**
- **CAPUTO, Tiziana
I-44122 Ferrara (IT)**
- **BÖHM, Thomas
64291 Darmstadt (DE)**

(74) Representative: **Sacco, Marco
Basell Poliolefine Italia S.r.l.
Intellectual Property
P.le Donegani, 12
44122 Ferrara (IT)**

(56) References cited:
**EP-A1- 2 602 102**
**EP-A1- 2 727 959**
**WO-A1-2012/143485**
**US-A1- 2013 165 613**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 227 192 B1

## Description

### FIELD OF THE INVENTION

The present invention relates to injection molded containers or thermoformed containers specially for food having a particular balance of mechanical and optical properties. Said container comprises a propylene/ethylene/1-hexene terpolymer having particular properties.

### BACKGROUND OF THE INVENTION

Propylene/ethylene/1-hexene terpolymer are already known in the art mainly for the production of pipes or films.
For example WO2006/002778 relates to a pipe system comprising a terpolymer of propylene/ethylene and alpha olefin wherein the ethylene content is from 0 to 9% by mol, preferably from 1 to 7% by mol and the 1-hexene content ranges from 0.2 to 5% wt.
US 6,365,682 relates to propylene based terpolymers to be used for films. The ethylene content ranges generally from 1 to 10 wt% and the alpha olefin ranges from 5 to 25wt%. for the preparation of films terpolymers having an ethylene content ranging from 0.9 to 3 wt% and an alpha olefin content ranging from 1 to 15wt% is indicated. Only terpolymer of propylene/ethylene and 1-butene are exemplified.
The applicant found that containers preferably a container for food can be obtained by using a propylene-ethylene-1-hexene terpolymer having a particular composition.

### SUMMARY OF THE INVENTION

Thus an object of the present invention is a container, preferably a container for food comprising a propylene, ethylene, 1-hexene terpolymer wherein in the terpolymer:

i) the content of ethylene derived units ranges from 0.6 wt% to 1.1 wt%;
ii) the content of 1-hexene derived units ranges from 1.1 wt% to 2.8 wt%;
iii) the ratio between the ethylene derived units content wt% and the 1-hexene derived units content wt% C2/C6 fulfills the following equation (I);

$$0.20<C2/C6< 0.39 \text{ (I);}$$

wherein C2 are the ethylene derived units wt% and C6 are the 1-hexene derived units wt%;
iv) the melt flow rate ,MFR measured according to ISO 1133 ,230° C, 2.16 kg ranges from 30 to 64 g/10 min.

### DETAILED DESCRIPTION OF THE INVENTION

Thus an object of the present invention is a container, preferably a container for food comprising a propylene, ethylene, 1-hexene terpolymer wherein in the terpolymer:

i) the content of ethylene derived units ranges from 0.6 wt% to 1.1 wt%; preferably from 0.6 wt% to 0.9 wt;
ii) the content of 1-hexene derived units ranges from 1.1 wt% to 2.8 wt%; preferably from 1.3 wt% to 2.6 wt%; more preferably from 1.6 wt% to 2.4 wt%;
iii) the ratio between the ethylene derived units content wt% and the 1-hexene derived units content wt% C2/C6 fulfills the following equation (I);

$$0.20<C2/C6< 0.39 \text{ (I);}$$

Preferably the equation (I) is $0.20<C2/C6<0.38$; more preferably $0.20<C2/C6<0.37$;
wherein C2 are the ethylene derived units wt% and C6 are the 1-hexene derived units wt%;
iv) the melt flow rate, MFR measured according to ISO 1133,230° C, 2.16 kg ranges from 30 to 64 g/10 min; preferably from 35 to 54 g/10 min; more preferably from 41 to 44 g/10 min.

The terpolymer contains only propylene, ethylene and 1-hexene, the sum of these three comonomers derived units content being 100 wt%.

Preferably the area of the DSC curve after the peak of the melting point (Tm) represents less than 22%; of the total area of the DSC curve.

In order to achieve the MFR of the terpolymer it is also possible to visbreak a polymer having a lower MFR. In order to visbreak the polymer known visbreaking agent can be used such as peroxides. With the visbreaking it is possible to fine tune the MFR of the product.

The terpolymers have a stereoregularity of isotactic type of the propylenic sequences this is clear by the low value of xylene extractables that is lower than 15 wt%.

The containers object of the present invention are further endowed with a low level of hexane extractable that renders them particularly suitable for containing food. The hexane extractables measured according to FDA 21 77:1520 no powder is lower than 2.2 wt% ; preferably lower than 2.1 wt%; more preferably equal to or lower than 2.0 wt%.

Furthermore the injection molded container of the present invention is preferably endowed with a low value of haze. The haze, measured on 0.4 mm wall of the container, is lower than 4.0% preferably lower than 3.5 %; more preferably lower than 3.0 %.

The containers of the present invention show preferably high values of impact properties. In a container having 0.4 mm wall thick the container impact test at 23°C shows values higher than 2.0 J; preferably higher than 3.0 J even more preferably higher than 3.2 J. Furthermore the containers of the present invention shows preferably good values of top load. The top load of a container having 0.4 mm wall thick is higher than 230 N; preferably higher than 250 N;

The injection molded container of the present invention can be obtained with method commonly known in the art.

The terpolymer for the injection molded container of the present invention can be prepared by polymerisation in one or more polymerisation steps. Such polymerisation can be carried out in the presence of Ziegler-Natta catalysts. An essential component of said catalysts is a solid catalyst component comprising a titanium compound having at least one titanium-halogen bond, and an electron-donor compound, both supported on a magnesium halide in active form. Another essential component (co-catalyst) is an organoaluminium compound, such as an aluminium alkyl compound.

An external donor is optionally added.

The catalysts generally used in the process of the invention are capable of producing polypropylene with a value of xylene insolubility at ambient temperature greater than 90%, preferably greater than 95%.

Catalysts having the above mentioned characteristics are well known in the patent literature; particularly advantageous are the catalysts described in US patent 4,399,054 and European patent 45977. Other examples can be found in US patent 4,472,524.

The solid catalyst components used in said catalysts comprise, as electron-donors (internal donors), compounds selected from the group consisting of ethers, ketones, lactones, compounds containing N, P and/or S atoms, and esters of mono- and dicarboxylic acids.

Particularly suitable electron-donor compounds are esters of phtalic acid and 1,3-diethers of formula:

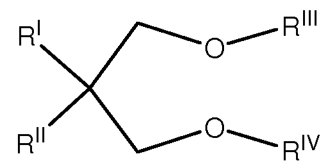

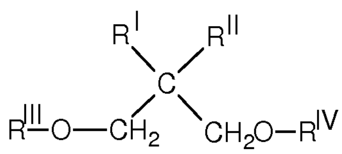

wherein $R^I$ and $R^{II}$ are the same or different and are $C_1$-$C_{18}$ alkyl, $C_3$-$C_{18}$ cycloalkyl or $C_7$-$C_{18}$ aryl radicals; $R^{III}$ and $R^{IV}$ are the same or different and are $C_1$-$C_4$ alkyl radicals; or are the 1,3-diethers in which the carbon atom in position 2 belongs to a cyclic or polycyclic structure made up of 5, 6, or 7 carbon atoms, or of 5-n or 6-n' carbon atoms, and respectively n nitrogen atoms and n' heteroatoms selected from the group consisting of N, O, S and Si, where n is 1 or 2 and n' is 1, 2, or 3, said structure containing two or three unsaturations (cyclopolyenic structure), and optionally being condensed with other cyclic structures, or substituted with one or more substituents selected from the group consisting of linear or branched alkyl radicals; cycloalkyl, aryl, aralkyl, alkaryl radicals and halogens, or being condensed with other cyclic structures and substituted with one or more of the above mentioned substituents that can also be bonded to the condensed cyclic structures; one or more of the above mentioned alkyl, cycloalkyl, aryl, aralkyl, or alkaryl radicals and

the condensed cyclic structures optionally containing one or more heteroatom(s) as substitutes for carbon or hydrogen atoms, or both.

Ethers of this type are described in published European patent applications 361493 and 728769.

Representative examples of said diethers are 2-methyl-2-isopropyl-1,3-dimethoxypropane, 2,2-diisobutyl-1,3-dimethoxypropane, 2-isopropyl-2-cyclopentyl-1,3-dimethoxypropane, 2-isopropyl-2-isoamyl-1,3-dimethoxypropane, 9,9-bis (methoxymethyl) fluorene.

Other suitable electron-donor compounds are phthalic acid esters, such as diisobutyl, dioctyl, diphenyl and benzylbutyl phthalate.

It is also possible to use mixture of at least two electron donor compounds one of which being present in an amount from 30 to 90% by mol with respect to the total amount of donors and selected from succinates and the other being selected from 1,3 diethers.

The preparation of the above mentioned catalyst component is carried out according to various methods.

For example, a $MgCl_2 \cdot nROH$ adduct (in particular in the form of spheroidal particles) wherein n is generally from 1 to 3 and ROH is ethanol, butanol or isobutanol, is reacted with an excess of $TiCl_4$ containing the electron-donor compound. The reaction temperature is generally from 80 to 120° C. The solid is then isolated and reacted once more with $TiCl_4$, in the presence or absence of the electron-donor compound, after which it is separated and washed with aliquots of a hydrocarbon until all chlorine ions have disappeared.

In the solid catalyst component the titanium compound, expressed as Ti, is generally present in an amount from 0.5 to 10% by weight. The quantity of electron-donor compound which remains fixed on the solid catalyst component generally is 5 to 20% by moles with respect to the magnesium dihalide.

The titanium compounds, which can be used for the preparation of the solid catalyst component, are the halides and the halogen alcoholates of titanium. Titanium tetrachloride is the preferred compound.

The reactions described above result in the formation of a magnesium halide in active form. Other reactions are known in the literature, which cause the formation of magnesium halide in active form starting from magnesium compounds other than halides, such as magnesium carboxylates.

The Al-alkyl compounds used as co-catalysts comprise the Al-trialkyls, such as Al-triethyl, Al-triisobutyl, Al-tri-n-butyl, and linear or cyclic Al-alkyl compounds containing two or more Al atoms bonded to each other by way of O or N atoms, or $SO_4$ or $SO_3$ groups.

The Al-alkyl compound is generally used in such a quantity that the Al/Ti ratio be from 1 to 1000.

The electron-donor compounds that can be used as external donors include aromatic acid esters such as alkyl benzoates, and in particular silicon compounds containing at least one Si-OR bond, where R is a hydrocarbon radical.

Examples of silicon compounds are (tert-butyl)$_2$Si(OCH$_3$)$_2$, (cyclohexyl)(methyl)Si (OCH$_3$)$_2$, (cyclopentyl)$_2$Si(OCH$_3$)$_2$ and (phenyl)$_2$Si(OCH$_3$)$_2$ and (1,1,2-trimethylpropyl)Si(OCH$_3$)$_3$.

1,3-diethers having the formulae described above can also be used advantageously. If the internal donor is one of these diethers, the external donors can be omitted.

In particular, even if many other combinations of the previously said catalyst components may allow to obtain propylene polymer compositions according to the present invention, the terpolymers are preferably prepared by using catalysts containing a phthalate as internal donor and (cyclopentyl)$_2$Si(OCH$_3$)$_2$ as outside donor, or the said 1,3-diethers as internal donors.

The said propylene-ethylene-hexene-1 polymers are produced with a polymerization process illustrated in EP application 1 012 195.

In detail, the said process comprises feeding the monomers to said polymerisation zones in the presence of catalyst under reaction conditions and collecting the polymer product from the said polymerisation zones. In the said process the growing polymer particles flow upward through one (first) of the said polymerisation zones (riser) under fast fluidisation conditions, leave the said riser and enter another (second) polymerisation zone (downcomer) through which they flow downward in a densified form under the action of gravity, leave the said downcomer and are reintroduced into the riser, thus establishing a circulation of polymer between the riser and the downcomer.

In the downcomer high values of density of the solid are reached, which approach the bulk density of the polymer. A positive gain in pressure can thus be obtained along the direction of flow, so that it become to possible to reintroduce the polymer into the riser without the help of special mechanical means. In this way, a "loop" circulation is set up, which is defined by the balance of pressures between the two polymerisation zones and by the head loss introduced into the system.

Generally, the condition of fast fluidization in the riser is established by feeding a gas mixture comprising the relevant monomers to the said riser. It is preferable that the feeding of the gas mixture is effected below the point of reintroduction of the polymer into the said riser by the use, where appropriate, of gas distributor means. The velocity of transport gas into the riser is higher than the transport velocity under the operating conditions, preferably from 2 to 15 m/s.

Generally, the polymer and the gaseous mixture leaving the riser are conveyed to a solid/gas separation zone. The solid/gas separation can be effected by using conventional separation means. From the separation zone, the polymer

enters the downcomer. The gaseous mixture leaving the separation zone is compressed, cooled and transferred, if appropriate with the addition of make-up monomers and/or molecular weight regulators, to the riser. The transfer can be effected by means of a recycle line for the gaseous mixture.

The control of the polymer circulating between the two polymerisation zones can be effected by metering the amount of polymer leaving the downcomer using means suitable for controlling the flow of solids, such as mechanical valves.

The operating parameters, such as the temperature, are those that are usual in olefin polymerisation process, for example between 50 to 120° C.

This first stage process can be carried out under operating pressures of between 0.5 and 10 MPa, preferably between 1.5 to 6 MPa.

Advantageously, one or more inert gases are maintained in the polymerisation zones, in such quantities that the sum of the partial pressure of the inert gases is preferably between 5 and 80% of the total pressure of the gases. The inert gas can be nitrogen or propane, for example.

The various catalysts are fed up to the riser at any point of the said riser. However, they can also be fed at any point of the downcomer. The catalyst can be in any physical state, therefore catalysts in either solid or liquid state can be used.

Conventional additives, fillers and pigments, commonly used in olefin polymers, may be added, such as nucleating agents, extension oils, mineral fillers, and other organic and inorganic pigments. In particular, the addition of inorganic fillers, such as talc, calcium carbonate and mineral fillers, also brings about an improvement to some mechanical properties, such as flexural modulus and HDT. Talc can also have a nucleating effect.

The nucleating agents are added to the compositions of the present invention in quantities ranging from 0.05 to 2% by weight, more preferably from 0.1 to 1% by weight, with respect to the total weight.

The container, object of the present invention can have various shapes, such as cubic, conic, or irregular shapes.

The particulars are given in the following examples, which are given to illustrate, without limiting, the present invention

EXAMPLES

The following examples are included to demonstrate preferred embodiments of the invention. It should be appreciated by those of skill in the art that the techniques disclosed in the examples which follow represent techniques discovered by the inventor to function well in the practice of the invention, and thus can be considered to constitute preferred modes for its practice. However, those of skill in the art should, in light of the present disclosure, appreciate that many changes can be made in the specific embodiments which are disclosed and still obtain a like or similar result without departing from the spirit and scope of the invention.

EXAMPLE 1

Examples

Characterization methods

Melting temperature and crystallization temperature:

Determined by differential scanning calorimetry (DSC). weighting 6 ±1 mg, is heated to 220 ±1° C at a rate of 20 °C/min and kept at 220 ±1° C for 2 minutes in nitrogen stream and it is thereafter cooled at a rate of 20° C/min to 40 ±2° C, thereby kept at this temperature for 2 min to crystallise the sample. Then, the sample is again fused at a temperature rise rate of 20° C/min up to 220° C ±1. The melting scan is recorded, a thermogram is obtained, and, from this, melting temperatures and crystallization temperatures are read.

Melt Flow Rate

Determined according to the method ISO 1133 (230° C, 5 kg).

Solubility in xylene:

2.5 g of polymer and 250 ml of xylene are introduced in a glass flask equipped with a refrigerator and a magnetical stirrer. The temperature is raised in 30 minutes up to the boiling point of the solvent. The so obtained clear solution is then kept under reflux and stirring for further 30 minutes. The closed flask is then kept for 30 minutes in a bath of ice

and water and in thermostatic water bath at 25° C for 30 minutes as well. The so formed solid is filtered on quick filtering paper. 100 ml of the filtered liquid is poured in a previously weighed aluminium container, which is heated on a heating plate under nitrogen flow, to remove the solvent by evaporation. The container is then kept on an oven at 80° C under vacuum until constant weight is obtained. The weight percentage of polymer soluble in xylene at room temperature is then calculated.

1-hexene and ethylene content:

Determined by $^{13}C$-NMR spectroscopy in terpolymers:

NMR analysis. $^{13}C$ NMR spectra are acquired on an AV-600 spectrometer operating at 150.91 MHz in the Fourier transform mode at 120 °C. The peak of the propylene CH was used as internal reference at 28.83. The $^{13}C$ NMR spectrum is acquired using the following parameters:

| | |
|---|---|
| Spectral width (SW) | 60 ppm |
| Spectrum centre (O1) | 30 ppm |
| Decoupling sequence | WALTZ 65_64pl |
| Pulse program (1) | ZGPG |
| Pulse Length (P1) (2)\ | for 90° |
| Total number of points (TD) | 32K |
| Relaxation Delay (2) | 15 s |
| Number of transients (3) | 1500 |

The total amount of 1-hexene and ethylene as molar percent is calculated from diad using the following relations:

$$[P] = PP + 0.5PH + 0.5PE$$

$$[H] = HH + 0.5PH$$

$$[E] = EE + 0.5PE$$

Assignments of the $^{13}C$ NMR spectrum of propylene/1-hexene/ethylene copolymers have been calculated according to the following table:

| Area | Chemical Shift | Assignments | Sequence |
|---|---|---|---|
| 1 | 46.93 - 46.00 | S | PP |
| 2 | 44.50 - 43.82 | S | PH |
| 3 | 41.34 - 4.23 | S | HH |
| 4 | 38.00 - 37.40 | S + S | PE |
| 5 | 35.70 - 35.0 | $4B_4$ | H |
| 6 | 35.00 - 34.53 | S + S | HE |
| 7 | 33.75 33.20 | CH | H |
| 8 | 33.24 | T | EPE |
| 9 | 30.92 | T | PPE |
| 10 | 30.76 | S | XEEX |
| 11 | 30.35 | S | XEEE |
| 12 | 29.95 | S | EEE |

(continued)

| Area | Chemical Shift | Assignments | Sequence |
|---|---|---|---|
| 13 | 29.35 | $3B_4$ | H |
| 14 | 28.94 - 28.38 | CH | P |
| 15 | 27.43 - 27.27 | S | XEE |
| 16 | 24.67 -24.53 | S | XEX |
| 17 | 23.44 -23.35 | $2B_4$ | H |
| 18 | 21.80 - 19.90 | $CH_3$ | P |
| 19 | 14.22 | $CH_3$ | H |

Haze (on 1 mm plaque):

According to the method used, 5x5 cm specimens are cut molded plaques of 1 mm thick and the haze value is measured using a a Gardner photometer with Haze-meter UX-10 equipped with a G.E. 1209 lamp and filter C. The instrument calibration is made by carrying out a measurement in the absence of the sample (0% Haze) and a measurement with intercepted light beam (100% Haze).

The measurement and computation principle are given in the norm ASTM-D1003.

The plaques to be tested are produced according to the following method. 75x75x2 mm plaques are molded with a GBF Plastiniector G235/90 Injection Molding Machine, 90 tons under the following processing conditions:

| | |
|---|---|
| Screw rotation speed: | 120 rpm |
| Back pressure: | 10 bar |
| Melt temperature: | 260°C |
| Injection time: | 5 sec |
| Switch to hold pressure: | 50 bar |
| First stage hold pressure: | 30 bar |
| Second stage pressure: | 20 bar |
| Hold pressure profile: | First stage 5 sec |
| | Second stage 10 sec |
| Cooling time: | 20 sec |
| Mold water temperature: | 40°C |

The plaques are conditioned for 12 to 48 hours at relative humidity of 50% and temperature of 23° C.

Haze on container:

The haze on container have been measured by cutting a 5x5 cm specimens from the container wall and using the same above procedure for the haze (on 2 mm plaque).

Top Load:

After at least 70 -hours conditioning at 23°C and 50% relative humidity, the bottle is settled between the two plates of the dynamometer and compressed with a stress velocity of the plate of 10mm/min.

The stress at collapse of the container is recorded and the value reported in N. The Top Load value is the mean value obtained from measurements repeated on 6 injection molded containers.

Container impact test (CIT)

The test is a biaxial impact test, the container, bottom up, was put on a sample older, having the same dimension of the container

The plate for the impact has a diameter of 62 mm and 5 kg of weight, it falls from 600 mm. The results are expressed in Joule. The results are an average of 10 tests.

Containers to be tested are produced with an injection moulding machine with the following specs: Injection moulding unit parameters:

Injection screw stroke: 1200 kN
Screw diameter: 32 mm
Injected volume: 102.9 cm3
Screw ratio L/D: 20
Max injection press: 2151 bar

The items to be tested must have the listed characteristics

| | |
|---|---|
| Volume: | 250 cc |
| Surface treatment: | Polished |

The shape of the container is a truncated pyramid with a square base, wherein the top base has a side of 70 mm and the bottom base has a side of 50 mm, the height being 80 mm

IZOD Impact Strength:

Determined according to IS0 180/1A. Samples have been obtained according to ISO 294-2.
The hexane extractables:
measured according to FDA 21 77:1520

Example 1 and comparative example 2

Terpolymers are prepared by polymerising propylene, ethylene and hexene-1 in the presence of a catalyst under continuous conditions in a plant comprising a polymerisation apparatus as described in EP 1 012 195.
The catalyst is sent to the polymerisation apparatus that comprises two interconnected cylindrical reactors, riser and downcomer. Fast fluidisation conditions are established in the riser by recycling gas from the gas-solid separator. In examples 1-2 no barrier feed has been used.
The catalyst employed comprises a catalyst component prepared by analogy with example 5 of EP-A-728 769 but using microspheroidal MgCl2•1.7C2H5OH instead of MgCl2•2.1C2H5OH. Such catalyst component is used with dicyclopentyl dimethoxy silane (DCPMS) as external donor and with triethylaluminium (TEA).
The polymer particles exiting the reactor are subjected to a steam treatment to remove the reactive monomers and volatile substances and then dried. The main operative conditions and characteristics of the produced polymers are indicated in Table 1.

Table 1 - Polymerization Process

| | | Ex.1 | Comp Ex 2 |
|---|---|---|---|
| Example | | | |
| | | | |
| TEAL/external donor | wt/wt | 4 | 4 |
| TEAL/catalyst | wt/wt | 6 | 6 |
| Temperature | °C | 80 | 80 |
| Pressure | bar-g | 25 | 23 |
| Split holdup riser | wt% | 42 | 42 |
| downcomer | wt% | 58 | 58 |
| $C_6^-$ riser | mole% | 1,27 | 1.5 |
| $C_2^-$ riser | mole% | 0,78 | 0.92 |
| $H_2/C_3^-$ riser | mol/mol | 0,08 | 0.072 |

(continued)

| | | Ex.1 | Comp Ex 2 |
|---|---|---|---|
| $C_6^-/(C_6^-+C_3^-)$ | mol/mol | 0,016 | 0.023 |
| $C_2^-$ = ethylene $C_3^-$ = propylene $C_6^-$ = 1-hexene | | | |

The polymer particles of examples 1-4 are introduced in an extruder, wherein they are mixed with 500 ppm of Irganox 1010 and 1000 ppm of Irgafos 168 and 500 ppm of Ca stearate, 1000 ppm of GMS 90 and 0.4 % of NX800 (1800 ppm of Millad 3988 for comparative example 2). The polymer particles are extruded under nitrogen atmosphere in a twin screw extruder, at a rotation speed of 250 rpm and a melt temperature of 200-250° C.

Properties of the obtained material have been reported in table 2:

Table 2

| | | Ex.1 | Comp Ex 2 |
|---|---|---|---|
| Ethylene content | Wt% | 0.8 | 1.0 |
| 1.hexene content | Wt% | 2.2 | 3.0 |
| Xylene soluble | Wt% | 3.4 | 4.2 |
| Hexane extractable (film) | % | 1.9 | 1.6 |
| MFR | dl/g | 44 | 24.9 |
| Izod Impact @23°C | kJ/m2 | 3.6 | 3.5 |
| Melting point | °C | 146.3 | 142.3 |
| C2/C6 | | 0.36 | 0.33 |
| Flexural modulus | MPa | 1240 | 1150 |
| Haze 1mm plaque | % | 5.1. | 6.5 |

The polymer obtained have been moulded in injection molded containers as above described. The injection molded containers have been analysed, the results are reported on table 3.

Table 3

| | | Ex.1 | Comp Ex 2 |
|---|---|---|---|
| TOP LOAD | N | 275 | 225 |
| HAZE on 0.4 mm thick container | % | 2.9 | - |

From table 3 clearly results that the container according to the present invention shows improved top load, and haze, . This effect is not predictable from the raw material, in fact in table 2 the flexural modulus of the two polymer is about the same (the difference is about 7%) while in the container the value of the top load of example 1 is higher (the difference is about 18%.)

## Claims

**1.** A container comprising a propylene, ethylene, 1-hexene terpolymer wherein in the terpolymer:

(i) the content of ethylene derived units ranges from 0.6 wt% to 1.1 wt%;
(ii) the content of 1-hexene derived units ranges from 1.1 wt% to 2.8 wt%;
(iii) the ratio between the ethylene derived units content and the 1-hexene derived units content C2/C6 fulfills the following equation (I);

$$0.20<C2/C6< 0.39;$$

wherein C2 is the content of ethylene derived units wt% and C6 is the content of 1-hexene derived units wt%; (iv) the melt flow rate MFR measured according to ISO 1133 ,230° C, 2.16 kg ranges from 32 to 64 g/10 min.

2. The container according to claim 1 wherein the content of 1-hexene derived units ranges 1.3 wt% to 2.6 wt%.

3. The container according to any of claims 1-2 wherein the content of ethylene derived units ranges from 0.6wt% to 0.9 wt%.

4. The container according to any of claims 1-3 wherein equation (I) is 0.20<C2/C6<0.38.

5. The container according to any of claims 1-4 wherein the melt flow rate, MFR, measured according to ISO 1133, 230° C, 2.16 kg, ranges from 35 to 54 g/10 min;

6. The container according to any of claims 1-4 having a TOP LOAD measured on a container having 0.4 mm wall thick at 23°C higher than 250N.

## Patentansprüche

1. Behälter, umfassend ein Terpolymer aus Propylen, Ethylen, 1-Hexen, wobei in dem Terpolymer:

   (i) der Gehalt an von Ethylen abgeleiteten Einheiten im Bereich von 0,6 Gew.% bis 1,1 Gew.% liegt
   (ii) der Gehalt an von 1-Hexen abgeleiteten Einheiten im Bereich von 1,1 Gew.% bis 2,8 Gew.% liegt;
   (iii) das Verhältnis zwischen dem Gehalt an von Ethylen abgeleiteten Einheiten und dem Gehalt an von 1-Hexen abgeleiteten Einheiten C2/C6 die folgende Gleichung (I) erfüllt:

$$0,20 < C2/C6 < 0,39;$$

   wobei C2 der Gehalt an von Ethylen abgeleiteten Einheiten in Gew.% ist und C6 der Gehalt an von 1-Hexen abgeleiteten Einheiten in Gew.% ist;
   (iv) die Schmelzflussrate MFR, gemessen gemäß ISO 1133, 230 °C, 2,16 kg, im Bereich von 32 bis 64 g/10 min liegt.

2. Behälter nach Anspruch 1, wobei der Gehalt an von 1-Hexen abgeleiteten Einheiten im Bereich von 1,3 Gew.% bis 2,6 Gew.% liegt.

3. Behälter nach einem der Ansprüche 1 bis 2, wobei der Gehalt an von Ethylen abgeleiteten Einheiten im Bereich von 0,6 Gew.% bis 0,9 Gew.% liegt.

4. Behälter nach einem der Ansprüche 1 bis 3, wobei Gleichung (I) 0,20 < C2/C6 < 0,38 ist.

5. Behälter nach einem der Ansprüche 1 bis 4, wobei die Schmelzflussrate, MFR, gemessen gemäß ISO 1133, 230 °C, 2,16 kg, im Bereich von 35 bis 54 g/10 min liegt.

6. Behälter nach einem der Ansprüche 1 bis 4 mit einer Toplast, gemessen an einem Behälter mit 0,4 mm Wanddicke bei 23 °C, von mehr als 250 N.

## Revendications

1. Récipient comprenant un terpolymère de propylène, d'éthylène, de 1-hexène, dans le terpolymère :

   (i) la teneur en unités dérivées de l'éthylène étant située dans la plage de 0,6 % en poids à 1,1 % en poids ;
   (ii) la teneur en unités dérivées de 1-hexène étant située dans la plage de 1,1 % en poids à 2,8 % en poids ;

(iii) le rapport entre la teneur en unités dérivées de l'éthylène et la teneur en unités dérivées de 1-hexène C2/C6 satisfait l'équation suivante (I) ;

$$0,20 < C2/C6 < 0,39 ;$$

dans laquelle C2 est la teneur en unités dérivées de l'éthylène en poids et C6 est la teneur en unités dérivées de 1-hexène en poids ;
(iv) l'indice de fluidité à chaud MFR mesuré selon ISO 1133, 230 °C, 2,16 kg étant situé dans la plage de 32 à 64 g/10 min.

**2.** Récipient selon la revendication 1, dans lequel la teneur en unités dérivées de 1-hexène est comprise entre 1,3 % en poids et 2,6 % en poids.

**3.** Récipient selon l'une quelconque des revendications 1 à 2, dans lequel la teneur en unités dérivées de l'éthylène est comprise entre 0,6 % en poids et 0,9 % en poids.

**4.** Récipient selon l'une quelconque des revendications 1 à 3, dans lequel l'équation (I) est 0,20<C2/C6<0,38.

**5.** Récipient selon l'une quelconque des revendications 1 à 4, dans lequel l'indice de fluidité à chaud (MFR), mesuré selon ISO 1133, 230 °C, 2,16 kg, est compris entre 35 et 54 g/10 min ;

**6.** Récipient selon l'une quelconque des revendications 1 à 4 ayant un TOP LOAD mesuré sur un récipient ayant une épaisseur de paroi de 0,4 mm à 23 °C supérieure à 250 N.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006002778 A
- US 6365682 B
- US 4399054 A
- EP 45977 A
- US 4472524 A
- EP 361493 A
- EP 728769 A
- EP 1012195 A